Europäisches Patentamt

European Patent Office

Office européen des brevets

(19)

(11) **EP 1 529 951 A1**

## (12) EUROPEAN PATENT APPLICATION

(43) Date of publication:
**11.05.2005 Bulletin 2005/19**

(51) Int Cl.7: **F02M 21/02**, F16K 17/22

(21) Application number: **03445127.8**

(22) Date of filing: **06.11.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Gaveco AB
135 02 Tyresö (SE)**

(72) Inventors:
• **Granfelt, Claes
129 40 Hägersten (SE)**
• **Berglind, Fredrik
SE-165 76 Hässelby (SE)**

(74) Representative: **Karlsson, Leif Karl Gunnar et al
L.A. Groth & Co. KB,
Box 6107
102 32 Stockholm (SE)**

### (54) A method and a system for disconnection of a fuel supply

(57)     A system for disconnection of a fuel supply line (5) to a consumer, particularly a gas driven combustion engine (M) in a vehicle, comprises a fuel pressure tank (T) connected to the engine (M) by a pipe rupture valve (1) influenced by the pressure in a pilot line (4). A dumping cylinder (9) is charged by an automatically operated valve (11) from the pilot line (4) when the engine is stopped or its speed drops below a predetermined minimum value.

## Description

### Field of Invention

The present invention relates to a method and a system for disconnecting a fuel supply line to a consumer, like a gas driven combustion engine, when said consumer has to be stopped.

### Background of the Invention

In the field of fuel supplied consumers, such as combustion engines, there are rules for how to handle the fuel from the tank or cylinders up to the engine. Similar rules exist also with respect to other fields of fuel and gas handling. E.g. in plants for unloading or discharging of gas cylinders there are safety rules for how to connect the pipes and valves.

Specially in the field of the increasingly used systems for driving of motor vehicles and other systems where high pressures or large stocks of gas are involved, the authorities have issued regulations with respect to system design and handling. Thus, there are rules for safety systems necessary against pipe ruptures or excessive gas flows.

Prior art methods and systems are described i.a. in US-A-6.044.863 and EP-A-01 202 724.9 by the present inventor. These methods and systems comply with most of the regulations issued by the authorities at that time.

However, in connection with the United Nations, Economic Commission for Europe, World Forum for Harmonization of Vehicle Regulations (WP.29), ECE Regulation No. 110, for natural gas driven vehicles (NGV) some further criteria are set up aimed at making the gas supply more safe. To comply with the new rules there is a demand for simulation of feeding line excess gas flow and ruptures. Gas supply systems for fuel cell applications (hydrogen) will have a similar system structure.

### Summary of the Invention

The problems present for solving of such a demand have found an excellent solution by the present invention as disclosed in the independent claims 1 and 5.

Particular advantageous embodiments have the features defined by the dependent claims.

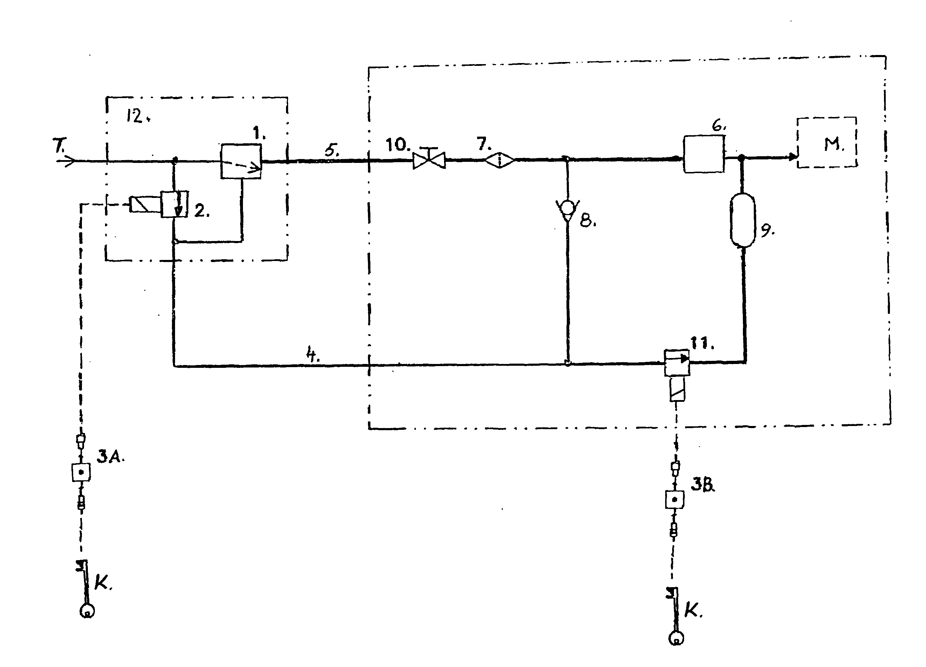

### Brief Description of the Drawing

The invention will be described below with reference to the accompanying drawing in which the single figure shows a preferred embodiment of a gas fuel supply system for an engine of a vehicle.

### Detailed Description of a Preferred Embodiment

As mentioned above an ECE Regulation No. 110 stipulates a number of criteria for having a natutal gas driven vehicle (NGV) allowed. One of these criteria is that by closure or stop of the vehicle all of the tank valves have to be closed automatically. To meet with this stipulation one has to simulate a tube or hose rupture in the safety system. Normally the safety system is active at all the times continuously, i.e. a so called "closed loop" system, having the advantage of avoiding pressure shocks in the high pressure gas system.

Such a simulation implies that no gases has to be released to the environment. The problem has been solved in a favourable way by the present invention by having a dumping cylinder 9 at the low pressure side of the pressure regulator 6 normally used for the fuel supply of the engine M.

Thus, a preferred embodiment of the present invention will now be described in more detail with reference to the single drawing figure.

From a gas fuel tank system (T), not shown in detail, a fuel supply line 5 is feeding the engine M of a vehicle (not shown). For safe feeding of the engine M a pipe rupture valve unit 12 is controlling the fuel supply. The pipe rupture valve unit 12 includes a rupture valve 1 controlled by a solenoid valve 2 or by a low pressure pilot line 4. Also a stop valve 10 is included in the supply line 5 for manual disconnection thereof. A fine filter 7 precedes the engine pressure regulator 6 in the supply line 5 to the engine M. The engine pressure regulator 6 supplies the engine M with gas fuel at a low pressure, e.g. normally about 10 bar.

A pilot line 4 is normally used for automatic control of the pipe rupture valve unit 12 in such a way that the unit 12 closes the gas supply when the pressure in the pilot line 4 drops beyond a predetermined low threshold level.

During normal driving the pressure of the pilot line 4 ought to be of the same value as the one of the supply line 5 or the one of the tank T. Thus, the system is to be in balance. Inside the rupture valve 1 there is a double piston unit (not shown in the drawing) having different piston diameters, the less one being in cooperation directly with the tank T and the larger one connected to the pressure of the pilot line 4. If the pressure of the pilot line 4 drops the force (resulting from the different diameters of the piston) will be changed such that the smaller diameter with the higher pressure overcome the larger diameter, now having the lower pressure. The result will be that the double piston unit is moved for closing the rupture valve 1. In detail the piston of the double piston unit is provided with a valve stem closing against av valve seat inside the rupture valve 1. Such a control function may be obtained by other mean as well.

In the preferred embodiment of the present invention the pilot line 4 is connected to the supply line 5 through a check valve 8, preventing gas from flowing into the pilot line 4, i.e. if a rupture occurs in the supply line 5 or in the pilot line 4 the pressure will drop immediately in the pilot line 4. This pressure drop in the pilot line 4 will result in the closure of the rupture valve 1 as mentioned above.

The pilot line 4 includes an automatic dumping valve 11 of solenoid type connected to a dumping cylinder 9, the output of which is connected to the supply line 5 behind the engine pressure regulator 6. The dumping valve 11 has a restricted flow capacity.

The solenoid valves 2 and 11 are individually controlled by identical or similar electronic units 3A and 3B used at starting respecively stopping the engine M.

The electronic units 3A and 3B are favourably arranged as a common processor unit included in the electrolock system of the vehicle controlled by the switch key K.

When the vehicle is manually started, e.g. by a switch key K introduced and turned in the electronic unit 3A of an electrolock, the pipe rupture valve 1 in the supply line 5 from the fuel tank T is activated automatically for a short time period by the solenoid valve 2 at admitted pressure in the dumping cylinder 9. When the vehicle is manually stopped or the engine M stalls (e.g. due to an accident) the electronic unit 3B will activate the solenoid valve 11 to open automatically for a short time period and the pilot line 4 pressure is dumped to the dumping cylinder 9 resulting in that the pipe rupture valve 1 closes simultaneously. The dumped gas in the dumping cylinder 11 is consumed at next start of the engine M.

The pressure of the dumping cylinder 9 must not exceed normal/acceptable engine feed pressure. To comply therewith the pressure and size of the dumping cylinder 9 is calculated by the relation:

$$P_u = \frac{V_t \times P_t + V_p \times P_p}{V_t + V_p} \text{ bar}$$

where

$P_u =$ the pressure of the dumping cylinder 9 after dumping the pilot line 4 pressure,

$P_t =$ the pressure of the dumping cylinder 9 under operation,

$P_p =$ the pressure of the pilot line 4 = max. pressure of the fuel pressure tank T (normally 260 bar for natural gas vehicles),

$V_t =$ the volume of the dumping cylinder 9 (litre),

$V_p =$ the volume of the pilot line 4 (litre).

Thus, by making use of a system according to the present invention, where closing of the rupture valve 1 is made by open the dumping valve 11 when the vehicle is stopped or when the engine speed (rpm) drops below a predetermined value, a safety system is obtained by the enclosed dumping cylinder 9 in a favourable way both with regard to simplicity and to manufacture costs.

Though the description given above refers to a field of application concerning natural gas driven vehicles it may be used in systems for hydrogen gas driven vehicles as well. Other fields of application are e.g. fuel cell operation, charging of fire-extinguishers, torpedos and other gas charged devices. Thus, the present invention may be generally used in connection with high pressure charged systems.

Various changes to the foregoing described and shown structures would now be evident to those skilled in the art. Accordingly, the particularly disclosed scope of the invention is set forth in the following claims.

List of reference characters

| | |
|---|---|
| 1 | rupture valve |
| 2 | solenoid valve (automatic activation) |
| 3A, 3B | electronic units |
| 4 | pilot line |
| 5 | fuel supply line |
| 6 | pressure regulator |
| 7 | fine filter |
| 8 | check valve |
| 9 | dumping cylinder |
| 10 | stop valve |
| 11 | solenoid valve (automatic dumping) |
| 12 | pipe rupture valve unit |
| K | switch key |
| M | engine |
| T | tank (single or multiple) |

**Claims**

1. A method for disconnecting a fuel supply line (5) to a consumer, like a gas driven combustion engine (M), when said engine (M) has to be stopped, said supply line (5) being controlled by one or more pipe rupture valves (1) influenced by the pressure in a pilot line (4), said method being **characterized in that** when the speed of the engine (M) drops below a predetermined minimum value a dumping valve (11) in said pilot line (4) opens automatically to a dumping cylinder (9).

2. A method according to claim 1, **characterized in that** said dumping valve (11) opens automatically effecting the closure of the pipe rupture valve (1).

3. A method according to claim 1 or claim 2, **characterized in that** said dumping valve (11) is kept open for a restricted time period only.

4. A method according to any of the preceding claims, **characterized in that** the pressure of the dumping cylinder (9) is used for restart of the engine (M).

5. A system for disconnecting a fuel supply line (5) to a consumer, like a gas driven combustion engine (M), when said engine (M) has to be stopped, said system comprising a fuel pressure tank (T) connected in said supply line (5) to one or more pipe rupture valves (1) influenced by the pressure in a pilot line (4), **characterized by** an automatically controlled dumping valve (11) in said pilot line (4) relieving the pressure into a dumping cylinder (9) or charging the dumping cylinder (9) when the speed of the engine (M) drops below a predetermined minimum value.

6. A system according to claim 5, **characterized in that** the output of said dumping cylinder (9) is connected to the supply line (5) of the engine (M) behind en engine pressure regulator (6) normally used for the fuel supply of the engine (M).

7. A system according to claim 5 or claim 6, **characterized in that** said dumping valve (11) is a solenoid valve electrically connected to an electronic unit (3B) used at stopping the engine (M).

8. A system according to any of the claims 5 through 7, **characterized in that** said dumping valve (11) has a restricted flow.

9. A system according to any of the claims 5 throuh 7, **characterized in that** the pressure and size of the dumping cylinder (9) is calculated by the relation:

$$P_u = \frac{V_t \times P_t + V_p \times P_p}{V_t + V_p} \text{ bar}$$

where

$P_u$ = the pressure of the dumping cylinder (9) after dumping the pilot line (4) pressure,

$P_t$ = the pressure of the dumping cylinder (9) under operation,

$P_p$ = the pressure of the pilot line (4) = max. pressure of the fuel pressure tank (T) (normally 260 bar for natural gas vehicles),

$V_t$ = the volume of the dumping cylinder (9) (litre),

$V_p$ = the volume of the pilot line (4) (litre).

EP 1 529 951 A1

**European Patent Office**

## EUROPEAN SEARCH REPORT

Application Number

EP 03 44 5127

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | EP 1 279 887 A (GAVECO AB) 29 January 2003 (2003-01-29) * paragraph [0010] - paragraph [0025]; figure 1 * | 1,5 | F02M21/02 F16K17/22 |
| D,A | US 6 044 863 A (GRANFELT CLAES) 4 April 2000 (2000-04-04) * column 1, line 55 - column 2, line 5; figure 2 * | 1,5 | |
| A | US 2 777 432 A (ENSIGN ROY F) 15 January 1957 (1957-01-15) * column 5, line 6 - line 69; figure 1 * | 1,5 | |
| A | EP 1 108 947 A (LINDE GAS AG) 20 June 2001 (2001-06-20) * paragraph [0024] - paragraph [0033]; figure 1 * | 1,5 | |

TECHNICAL FIELDS SEARCHED (Int.Cl.7)

F02M
F16K

The present search report has been drawn up for all claims

| Place of search | Date of completion of the search | Examiner |
|---|---|---|
| THE HAGUE | 23 April 2004 | Raposo, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 44 5127

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2004

| Patent document cited in search report | | Publication date | Patent family member(s) | | Publication date |
|---|---|---|---|---|---|
| EP 1279887 | A | 29-01-2003 | EP | 1279887 A1 | 29-01-2003 |
| | | | DE | 1279887 T1 | 27-11-2003 |
| US 6044863 | A | 04-04-2000 | SE | 510598 C2 | 07-06-1999 |
| | | | SE | 9602702 A | 09-01-1998 |
| US 2777432 | A | 15-01-1957 | NONE | | |
| EP 1108947 | A | 20-06-2001 | DE | 19961080 A1 | 21-06-2001 |
| | | | EP | 1108947 A1 | 20-06-2001 |